# FASCICULE DE BREVET EUROPEEN

(11) **EP 2 668 098 B1**
(45) Date de publication et mention de la délivrance du brevet: **02.09.2015**
(21) Numéro de dépôt: 12708555.3
(22) Date de dépôt: 25.01.2012
(51) Int. Cl.: B64C 35/00, B63B 1/24

(54) **AVION MOTORISÉ À STRUCTURE MIXTE HYDRODYNAMIQUE ET AÉRODYNAMIQUE POUR LE DÉCOLLAGE ET L'ATTERRISSAGE SUR L'EAU, LE SOL OU LA NEIGE**
MOTORFLUGZEUG MIT GEMISCHTER HYDRODYNAMISCHER UND AERODYNAMISCHER STRUKTUR ZUM STARTEN UND LANDEN AUF WASSER, BODEN ODER SCHNEE
MOTORIZED AEROPLANE WITH HYBRID HYDRODYNAMIC AND AERODYNAMIC STRUCTURE FOR TAKING OFF AND LANDING ON WATER, THE GROUND OR SNOW

(30) Priorité: 25.01.2011 FR 1100220
(43) Date de publication de la demande: 04.12.2013
(73) Titulaire: Lisa Aeronautics, 73370 Le Bourget du Lac (FR)
(72) Inventeur: HERZBERGER, Erick, F-74000 Annecy (FR); BERNOLE, Luc, F-73370 Le Bourget du lac (FR); SENELLART, Benoit, F-73000 Chambéry (FR); CLAVREUL, Jean-François, F-73370 Le Bourget du Lac (FR); REMOND, Satya, F-07800 LA VOUTE-SUR-RHONE (FR); PETRINI, Cédric, F-73230 Barby (FR)
(74) Mandataire: Hecké, Gérard
(86) Numéro de dépôt international: PCT/FR2012/000033
(87) Numéro de publication internationale: WO 2012/101352

(56) Documents cités:
- WO-A1-2007/141425
- WO-A2-2011/005226
- FR-A1- 2 313 254
- GB-A- 760 525
- US-A- 4 080 922

## Description

### Domaine technique de l'invention

L'invention est relative à un avion motorisé à train d'atterrissage comprenant un fuselage doté, à sa base, d'une paire d'hydrofoils conformés selon des ailerons de portance et de stabilisation hydrodynamiques agencés vers le bas selon un V renversé.

### État de la technique

Les fuselages connus d'hydravions comportent généralement à l'avant une forme de quille ou d'étrave, et un évidement dans la partie médiane de la base, laquelle est immergée sur l'eau. L'effet de succion au décollage sur l'eau est compensé par la présence de l'évidement, mais une fois dans l'air après le décollage, se produit un effet aérodynamique avec formation d'un écoulement turbulent qui augmente la traînée de l'avion et la consommation de carburant.

On a déjà proposé un avion amphibie comportant des excroissances en forme de capots saillants, intégrant une partie du train d'atterrissage rentrant. Ces excroissances n'ont aucune fonction de portance dynamique, tout au plus une fonction de stabilité statique pour constituer des flotteurs.

Il existe également des avions à hydrofoils pour amerrir et décoller sur l'eau, mais ils sont dépourvus de train d'atterrissage.

D'autre part, des avions connus d'assistance et de recherche sur des terrains neigeux, possèdent des skis rétractables, lesquels ne sont pas rangés à l'intérieur du fuselage.

La Demanderesse a proposé, par WO-A-2007/141425, qui est considéré comme l'état de la technique plus proche, un avion dont le fuselage est doté à sa base d'une paire d'hydrofoils, formant des ailerons de stabilisation hydrodynamiques agencés vers le bas selon un V renversé. Par ailleurs, les jambes du train d'atterrissage sont articulées chacune autour d'un axe de pivotement agencé sur les hydrofoils. La présence des hydrofoils engendre un effet de portance hydrodynamique lors d'un décollage sur l'eau, dès qu'une certaine vitesse est atteinte, de sorte que l'avion peut alors sortir rapidement de l'eau. L'atterrissage sur l'eau s'effectue en douceur et sans remous, grâce à l'effet de guidage des hydrofoils.

Le document GB 760 525 décrit un avion avec un dispositif d'hydrofoils, dont le profil en V, et son calage ne permettent pas d'obtenir une stabilité intrinsèque.

### Objet de l'Invention

L'avion polyvalent décrit ci-dessus, proposé par WO-A-2007/141425, se révèle globalement satisfaisant. Cependant, l'invention vise à améliorer encore les performances de cet avion, notamment en termes de stabilité.

L'avion conforme à l'invention est remarquable en ce que :
- la jonction de chaque hydrofoil avec le fuselage est située en avant du centre de gravité de l'avion,
- la distance séparant la jonction de chaque hydrofoil avec le fuselage, par rapport au centre de gravité de l'avion, est comprise entre 0 et 170% de la corde moyenne aérodynamique de l'aile principale de l'avion, de préférence entre 20% et 135%,
- chaque hydrofoil est incliné vers le bas, depuis son bord d'attaque en direction de son bord de fuite, la droite reliant ces deux bords formant, avec un plan tangent PTQ horizontal passant par le bas du fuselage, un angle de calage nominal (c) compris entre 2 et 12°, de préférence entre 6 et 8°,
- la partie de l'hydrofoil se trouvant sous ledit plan tangent (PTQ), est située en avant du centre de gravité de l'avion.

Le calage du foil est constitué par l'angle formé dans un plan parallèle au plan de symétrie de l'avion, entre d'une part le plan tangent PTQ et d'autre part la ligne qui relie le bord d'attaque au bord de fuite du profil de l'hydrofoil. Lorsque l'avion est en trajectoire rectiligne symétrique, et que le plan PTQ est parallèle à la surface de l'eau, le calage des hydrofoils doit être à moinsde 4 ° près le calage de finesse maximale des hydrofoils. Si une perturbation écarte l'avion de sa trajectoire et lui donne un angle de lacet, le fait que les hydrofoils soit traversant va permettre un nouvel état d'équilibre en portance de l'avion par différence d'immersion des hydrofoils (roulis induit). Combiné avec la stabilisation aérodynamique, le fait que les hydrofoils soient calés à proximité de la finesse maximale, procure un différentiel de traînée sur les hydrofoils qui va compenser le moment déstabilisateur en lacet dû au centre de gravité. Il en résulte un effet stabilisant pour l'appareil.

Le positionnement spécifique des deux hydrofoils en avant du centre de gravité, combiné à un bord d'attaque incisif, confère une stabilité optimum de l'avion. En effet, le comportement de ce profil incisif, notamment l'évolution de sa finesse en fonction de l'incidence, permet de créer un moment stabilisateur en lacet, par différentiel de traînée.

D'autres caractéristiques techniques peuvent être utilisées isolément ou en combinaison :
- vu de face, l'angle d'inclinaison de chaque hydrofoil par rapport à l'horizontale est compris, dans la position normale de l'avion, entre 10° et 50°, de préférence entre 10 et 30°
- l'avion comprend des moyens de pivotement de chaque hydrofoil, de façon à modifier cet angle d'inclinaison dans une plage de valeurs comprises entre -10° et 30°, notamment pour les phases de fonctionnement hors de l'eau.
- chaque hydrofoil est muni d'un tronçon intermédiaire souple, permettant un débattement de son extrémité libre en service, en fonction des efforts auxquels est soumis cet hydrofoil.
- vu de dessus, l'angle d'inclinaison vers l'arrière de chaque hydrofoil par rapport à un axe transversal est compris, dans la position normale de l'avion, entre 0 et 60°, de préférence entre 20 et 40°
- l'avion comprend des moyens de réglage, en service, de cet angle de calage, dans une plage de plus ou moins 10° par rapport à sa valeur nominale.
- le côté extérieur de chaque hydrofoil est prolongé par un aileron, s'étendant de façon oblique à la fois vers le haut et à l'opposé du fuselage.
- il est prévu des moyens d'amortissement, reliant chaque hydrofoil au fuselage.
- chaque hydrofoil est au moins en partie rétractable, à l'intérieur du fuselage.
- au moins un hydrofoil est pourvu d'une plate-forme, assurant une fonction de marchepied.
- l'avion comprend au moins un hydrofoil supplémentaire, placé de façon médiane en référence à l'axe longitudinal de l'avion, en arrière du centre de gravité
- le bord de fuite et/ou le bord d'attaque de chaque hydrofoil est formé par un aileron mobile par rapport au reste de l'hydrofoil.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue schématique en perspective de l'avion motorisé selon l'invention,
- les figurés 2 et 3 sont des vues, respectivement de dessous et de face, illustrant partiellement, à échelle agrandie, l'avion de la figure 1,
- la figure 4 est une vue en perspective d'un hydrofoil, équipant le fuselage de l'avion des figures précédentes,
- la figure 5 est un vue en coupe transversale selon le plan IV visible à la figure 4,
- la figure 6 est une vue de côté de l'avion des figures précédentes,
- les figures 7, 8, 9 et 10 sont des vues en coupe transversale, analogues à la figure 5, illustrant trois variantes de réalisation de l'invention et
- les figures 11 et 12 sont des vues de face similaires à la figure 2, illustrant des variantes supplémentaires de l'invention.

### Description détaillée d'un mode préférentiel de l'invention

Sur les différentes figures, un avion 10 motorisé, notamment de loisirs et de petite taille, comporte un fuselage 11 longitudinal, une aile 12 transversale principale, à portance variable, un moteur à hélice 13 associé à l'empennage 14 porté par la dérive 31, et un poste de pilotage 15.

Un tel avion 10, de type polyvalent, possède une structure hydrodynamique et aérodynamique adaptée au décollage et à l'atterrissage sur l'eau, le sol ou la neige. L'invention s'applique également à tout autre type d'avions, dans lequel le moteur à hélice 13 peut être remplacé par un bi-moteur ou une turbine.

Le poste de pilotage 15 est placé dans le plan médian de symétrie, à l'avant de l'aile 12. L'aile 12 peut être du type décrit dans le document FR-A-2856655. A l'opposé de l'aile 12, la base du fuselage 11 est dotée d'une paire d'hydrofoils 20 et 20' qui vont être décrits plus en détail dans ce qui suit,

On définit une position dite « normale » de cet avion, pour laquelle l'aile 12 est horizontale et se trouve placée au-dessus des hydrofoils 20 et 20'. En référence à cette position normale, on désigne pour chaque hydrofoil le bord avant 22 et 22', ou bord d'attaque, ainsi que le bord arrière 24 et 24', ou bord de fuite. On définit en outre la face supérieure 26 et 26', ainsi qu'inférieure 28 et 28' de chaque hydrofoil 20 et 20'. Enfin on note 30 et 30' leur côté intérieur, adjacent au fuselage, ainsi que 32 et 32' leur côté extérieur opposé à ce fuselage.

Le côté intérieur 30 ou 30' de chaque hydrofoil 20 ou 20' se prolonge par un tronçon de liaison respectif 34 ou 34', assurant la connexion au fuselage, Enfin, le côté extérieur 32 ou 32' de chaque hydrofoil 20 ou 20' est terminé par un aileron respectif 36 ou 36'. Ce dernier fait saillie de façon oblique, à savoir vers le haut en référence à la position normale de l'avion, ainsi qu'à l'opposé du fuselage.

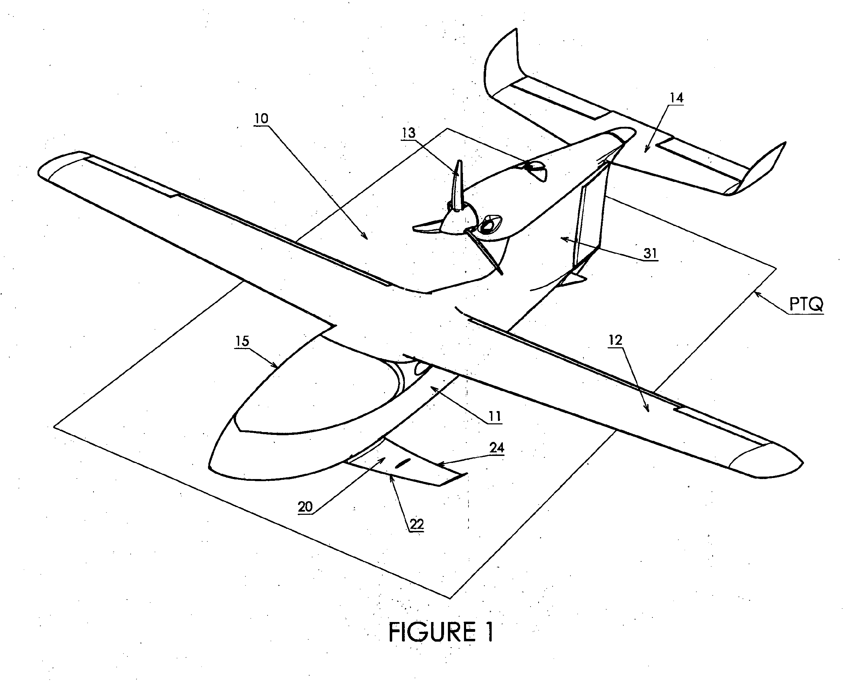

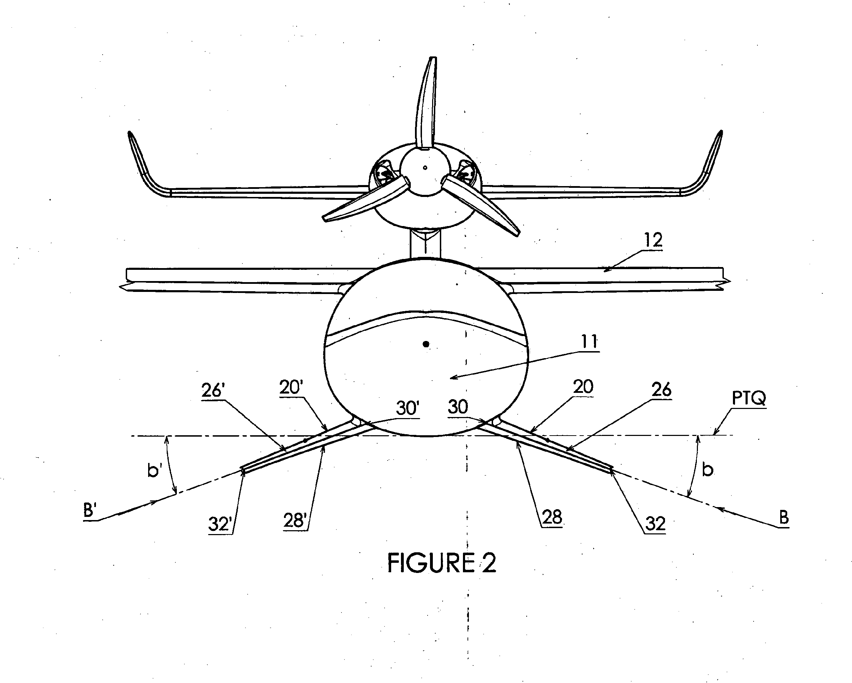

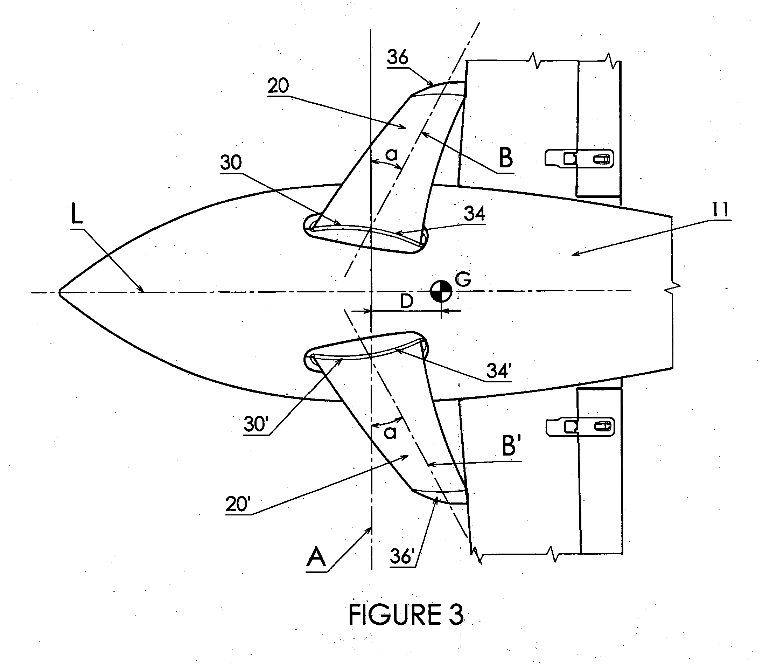

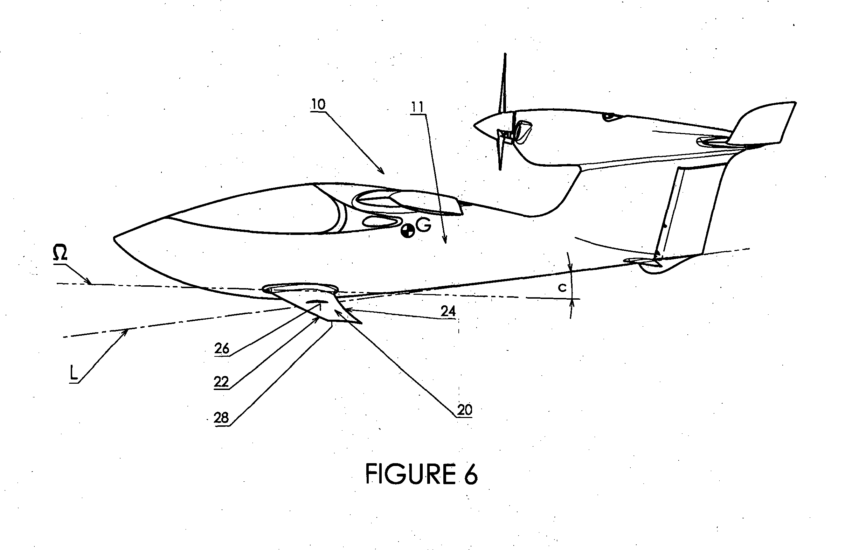

On note, en référence aux figures 1 et 2, PTQ le plan tangent passant par le bas du fuselage. En référence aux figures 3 et 6, on note L l'axe longitudinal médian de l'avion, s'étendant selon le plan PTQ. Enfin, on note G le centre de gravité, ainsi que A l'axe perpendiculaire à L, reliant le milieu des côtés intérieurs 30 et 30'.

Les hydrofoils 20 et 20', qui sont symétriques par rapport à l'axe L, sont placés en avant du centre de gravité G, en ce sens que l'axe précité A est placé en avant de G. A titre non limitatif, la distance D séparant A et G, selon l'axe L, est comprise entre 0 et 170% de la corde moyenne aérodynamique de l'aile principale 12, de préférence entre 20% et 135%. De façon classique, cette corde moyenne aérodynamique CMA est définie comme le rapport entre la surface portante totale de l'aile 12 et son envergure, soit la distance entre ses deux extrémités latérales.

En référence à la figure 3, à savoir vus de dessous, les hydrofoils sont inclinés vers l'arrière. On note B et B' les axes principaux médians de chaque hydrofoil, passant par le milieu des deux côtés 30 et 32, ou bien 30' et 32'. On note en outre a et a' les angles dits de flèche entre, soit A et B, soit A et B', Dans ces conditions, a et a' sont compris chacun entre 0 et 60°, de préférence entre 20 et 40°.

En référence désormais à la figure 2, à savoir vus de face, les hydrofoils 20 et 20' sont inclinés vers le bas, en formant un V renversé. On note b et b' les angles dits de dièdre entre, soit l'axe principal médian B et l'horizontale, soit l'axe principal médian B' et l'horizontale. Dans ces conditions, b et b' sont compris chacun entre 10 et 50°, de préférence entre 10 et 30°.

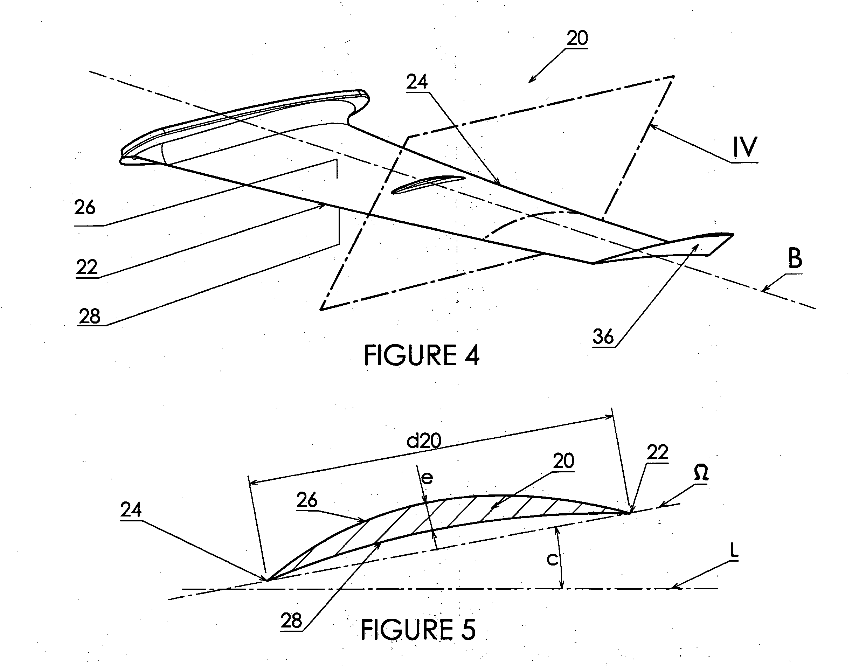

La figure 5 illustre une coupe transversale de l'hydrofoil, selon un plan IV perpendiculaire à son axe principal B. On retrouve les bords d'attaque 22 et de fuite 24, ainsi que les faces supérieure 26 et inférieure 28. On constate que cet hydrofoil est incliné vers le bas, en direction du bord de fuite, à savoir que ce dernier est placé au-dessous du bord d'attaque, en position normale. Si on note Ω la droite reliant ces deux bords, elle forme un angle c, dit de calage nominal, avec l'axe longitudinal L, angle qui est compris entre 2 et 12°, de préférence entre 6 et 8°.

A titre de variante non représentée, on peut prévoir un dispositif qui permet de faire varier en fonctionnement cet angle de calage, dans une plage de plus ou moins 10° par rapport à sa valeur nominale définie ci-dessus. Ce dispositif peut être piloté par un actionneur, asservi mécaniquement, ou bien simplement s'actionner selon l'effort.

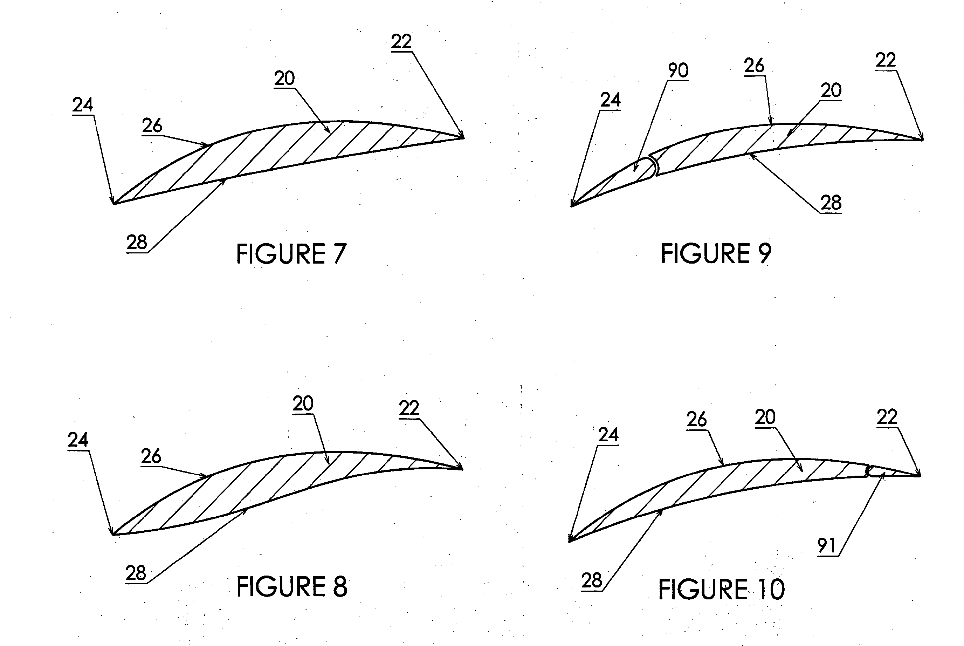

Les figures 9 et 10 illustrent une coupe transversale similaire à la figure 5, avec des agencements formant une alternative à cette variation du calage. On peut prévoir en effet de n'avoir qu'une partie du profil de l'hydrofoil qui soit mobile, sur le bord d'attaque et/ou sur le bord de fuite, par le biais d'ailerons notés 90 sur la coupe de la figure 9 et 91 sur la figure 10. La possibilité de débattement de chaque aileron, par rapport au reste de l'hydrofoil, est par exemple permise par un pivotement autour d'un axe s'étendant d'arrière en avant, sur ces figures 9 et 10.

En faisant à nouveau référence à cette figure 5, on note que les deux faces respectivement supérieure 26 et inférieure 28 possèdent une concavité qui est tournée vers le haut. Elles sont ainsi toutes deux cambrées vers le haut à savoir que, en d'autres termes, elles sont en tout point placées au-dessous de leur tangente. Ceci confère un profil incisif aux deux bords de l'hydrofoil.

A titre de variante, on peut prévoir que la face inférieure 28 est droite, entre les deux bords 22 et 24, comme le montre la figure 7. On peut également prévoir que cette face 28 présente un profil droit ou concave tel que décrit ci-dessus, uniquement au voisinage du bord d'attaque, mais en revanche pas vers le bord de fuite ni dans la région médiane (voir figure 8). Selon une dernière possibilité, non représentée, on peut enfin prévoir que cette face 28 présente un profil droit ou concave tel que décrit ci-dessus, uniquement au voisinage du bord d'attaque et du bord de fuite, mais en revanche pas dans la région médiane. Par voisinage, on entend une dimension axiale d'au moins 15% de la distance totale entre les deux bords, notée d20 sur la figure 5.

Toujours en référence à la figure 5, on définit e l'épaisseur maximale de l'hydrofoil, vu en coupe transversale. De façon avantageuse, cette épaisseur est faible à savoir que le rapport (e / d20) entre cette épaisseur et la distance totale de l'hydrofoil est compris entre 0,02 et 0,15.

L'avion conforme à l'invention peut en outre être équipé de fonctionnalités supplémentaires, qui ne sont pas représentées sur les différentes figures.

Ainsi, pour le décollage et l'atterrissage sur le sol ou la neige, l'avion peut être équipé d'un train d'atterrissage mixte à roues et à skis, qui peut être escamoté à l'intérieur du fuselage par tout moyen approprié. De plus l'avion peut comporter, à l'avant du fuselage, une roue supplémentaire d'atterrissage, également de type escamotable, qui peut être associée à un ski.

Les différentes figures correspondent à une configuration en vol, ainsi que pour le décollage et atterrissage sur l'eau, dans laquelle le train d'atterrissage est rangé dans le fuselage 11 lisse. Lors d'un décollage sur l'eau, les deux hydrofoils 20 engendrent un effet de portance hydrodynamique dès qu'une certaine vitesse est atteinte. L'avion 10 peut alors sortir rapidement de l'eau. L'atterrissage sur l'eau s'effectue en douceur et précision grâce au fuselage 11 lisse, et à l'effet de guidage des hydrofoils 20.

L'avion conforme à l'invention peut bien entendu adopter d'autres configurations, pour le décollage et l'atterrissage sur terre ou encore sur neige. A cet effet, cet avion peut posséder des caractéristiques mécaniques identiques ou analogues à celles décrites dans WO-A-2007/141425.

En outre, on peut prévoir que la face supérieure d'au moins un des deux hydrofoils soit formée de telle manière qu'elle permette à l'utilisateur d'accéder au cockpit, en utilisant l'hydrofoil comme marchepied.

De plus, la liaison entre chaque hydrofoil et le fuselage peut être équipée de moyens d'amortissement. Chaque hydrofoil peut également être escamotable, en tout ou partie, à l'intérieur du fuselage.

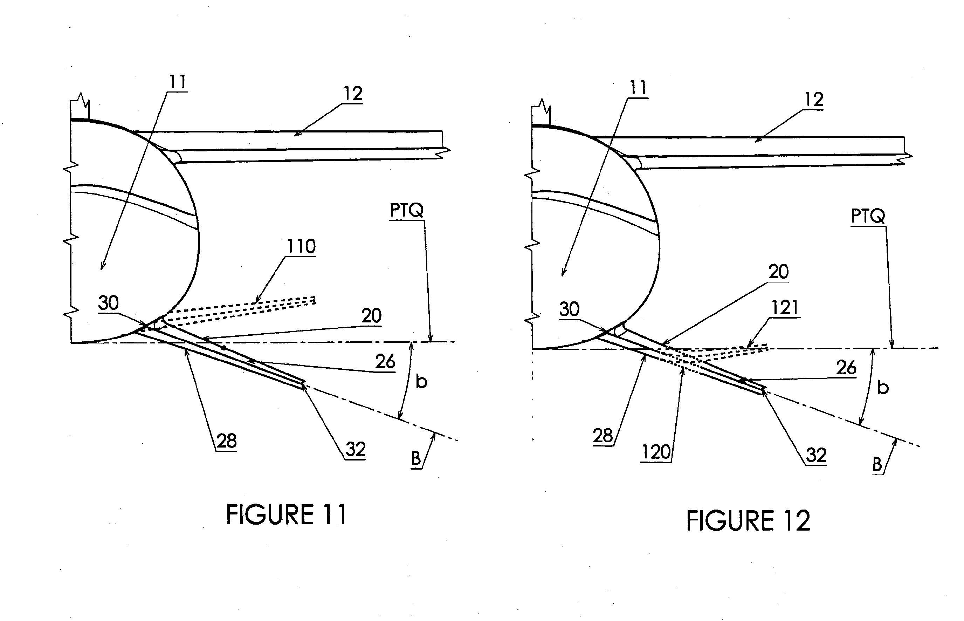

La figure 11 illustre une variante supplémentaire, dans laquelle les hydrofoils peuvent pivoter autour d'un axe sensiblement longitudinal, de façon à modifier l'angle de dièdre b, tel que défini ci-dessus. Ainsi, en particulier en fonctionnement hors de l'eau, un actionneur non représenté, de tout type approprié, fait pivoter chaque hydrofoil dans la position notée 110 sur la figure 11. De la sorte, cet angle de dièdre est ramené vers des valeurs faibles ou négatives, comprises par exemple entre -10° et 30°.

La figure 12 illustre une autre variante, dans laquelle un tronçon intermédiaire 120 de l'hydrofoil possède une structure interne, conçue pour permettre une certaine souplesse. De la sorte, l'extrémité libre de l'hydrofoil possède une certaine possibilité de débattement par rapport au corps de l'hydrofoil, de sorte qu'elle peut par exemple adopter la position référencée 121. Ainsi l'angle de dièdre b et l'angle de calage c, relatifs à cette extrémité du foil, s'adaptent de façon naturelle à l'effort que subit cette dernière.

On peut enfin prévoir un hydrofoil supplémentaire, placé en arrière du centre de gravité G. Ceci peut apporter une aide, en créant un appui hydrodynamique d'équilibrage et en autorisant un meilleur contrôle en direction. Cet hydrofoil arrière peut être lié à la gouverne mobile de direction, ou du moins posséder une partie mobile qui assume la fonction directionnelle de l'avion dans l'eau.

## Revendications

1. Avion motorisé comportant un fuselage (11) doté à sa base d'une paire d'hydrofoils (20, 20') conformés selon des ailerons de portance et de stabilisation hydrodynamiques agencés vers le bas selon un V renversé, **caractérisé en ce que**
- la jonction (A) de chaque hydrofoil avec le fuselage est située en avant du centre de gravité (G) de l'avion,
- la distance (D) séparant la jonction (A) de chaque hydrofoil avec le fuselage, par rapport au centre de gravité (G) de l'avion, est comprise entre 0 et 170% de la corde moyenne aérodynamique de l'aile principale (12) de l'avion, de préférence entre 20% et 135%,
- chaque hydrofoil (20, 20') est incliné vers le bas, depuis son bord d'attaque (22) en direction de son bord de fuite (24), la droite (Ω) reliant ces deux bords formant, avec un plan tangent (PTQ) horizontal passant par le bas du fuselage, un angle de calage nominal (c) compris entre 2 et 12°, de préférence entre 6 et 8°,
- la partie de l'hydrofoil (20, 20') se trouvant sous ledit plan tangent (PTQ), est située en avant du centre de gravité (G).

2. Avion selon la revendication 1, **caractérisé en ce que** chaque hydrofoil (20, 20') comprend, vu en coupe transversale, une face supérieure (26) dont la concavité est dirigée vers le haut, en position normale de l'avion, ainsi qu'une face inférieure (28) qui est droite ou dont la concavité est également dirigée vers le haut, au moins dans la zone de son bord d'attaque (22), de sorte qu'au moins ce bord d'attaque présente une forme incisive.

3. Avion selon la revendication 1, **caractérisé en ce que** la face inférieure (28) de chaque hydrofoil (20, 20') est droite ou possède une concavité dirigée vers le haut, également dans la zone de son bord de fuite (24).

4. Avion selon l'une des revendications précédentes, **caractérisé en ce que**, vu de face, l'angle d'inclinaison (b, b') de chaque hydrofoil (20, 20') par rapport au plan horizontal (PTQ) est compris, dans la position normale de l'avion, entre 10 et 50°, de préférence entre 10 et 30°.

5. Avion selon la revendication 4, **caractérisé en ce qu'**il comprend des moyens de pivotement de chaque hydrofoil (20, 20'), de façon à modifier ledit angle d'inclinaison (b, b') dans une plage de valeurs comprises entre -10° et 30°, notamment pour les phases de fonctionnement hors de l'eau.

6. Avion selon l'une des revendications précédentes, **caractérisé en ce que** chaque hydrofoil (20, 20') est muni d'un tronçon intermédiaire souple, permettant un débattement de son extrémité libre (121) en service, en fonction des efforts auxquels est soumis cet hydrofoil.

7. Avion selon l'une des revendications précédentes, **caractérisé en ce que**, vu de dessus, l'angle d'inclinaison (a, a') vers l'arrière de chaque hydrofoil (20) par rapport à un axe transversal (A) est compris, dans la position normale de l'avion, entre 0 et 60°, de préférence entre 20 et 40°.

8. Avion selon la revendication 1, **caractérisé en ce qu'**il comprend des moyens de réglage de l'angle de calage (c), dans une plage de plus ou moins 10° par rapport à sa valeur nominale.

9. Avion selon l'une des revendications précédentes, **caractérisé en ce que** le côté extérieur (32, 32') de chaque hydrofoil est prolongé par un aileron (36, 36'), s'étendant de façon oblique à la fois vers le haut et à l'opposé du fuselage.

10. Avion selon l'une des revendications précédentes, **caractérisé en ce qu'**il est prévu des moyens d'amortissement, reliant chaque hydrofoil au fuselage.

11. Avion selon l'une des revendications précédentes, **caractérisé en ce que** chaque hydrofoil est au moins en partie rétractable, à l'intérieur du fuselage.

12. Avion selon l'une des revendications précédentes, **caractérisé en ce qu'**au moins un hydrofoil est pourvu d'une plate-forme, assurant une fonction de marchepied.

13. Avion selon l'une des revendications précédentes, **caractérisé en ce qu'**il comprend au moins un hydrofoil supplémentaire, placé de façon médiane en référence à l'axe longitudinal de l'avion, en arrière du centre de gravité.

14. Avion selon l'une des revendications précédentes, **caractérisé en ce que** le bord de fuite (90) et/ou le bord d'attaque (91) de chaque hydrofoil est formé par un aileron (90, 91) mobile par rapport au reste de l'hydrofoil.

## Patentansprüche

1. Motorflugzeug, das einen Rumpf (11) aufweist, an dessen Unterseite ein Paar Tragflügel (20, 20') angeordnet sind, die als Querruder zum Tragen und zur hydrodynamischen Stabilisierung geformt und gemäß eines umgedrehten V nach unten hin angeordnet sind, **dadurch gekennzeichnet, dass**
- die Verbindung (A) jedes Tragflügels mit dem Rumpf vor dem Schwerpunkt (G) des Flugzeugs angeordnet ist,
- der Abstand (D) zwischen der Verbindung (A) jedes Tragflügels zum Rumpf bezogen auf den Schwerpunkt (G) des Flugzeugs 0 bis 170% der durchschnittlichen Flügeltiefe des Hauptflügels (12) des Flugzeugs, vorzugsweise 20 bis 135%, beträgt,
- jeder Tragflügel (20, 20') von seiner Vorderkante (22) aus in Richtung seiner Hinterkante (24) nach unten geneigt ist, wobei die Gerade (Ω), die diese beiden Kanten verbindet, mit einer horizontalen Tangentialebene (PTQ), die durch den unteren Rumpfteil führt, einen nominalen Einstellwinkel (c) von 2 bis 12°, vorzugsweise 6 bis 8°, bildet,
- sich der Bereich des Tragflügels (20, 20'), der sich unter der genannten Tangentialebene (PTQ) befindet, vor dem Schwerpunkt (G) befindet.

2. Flugzeug nach Anspruch 1, **dadurch gekennzeichnet, dass** jeder Tragflügel (20, 20') im Querschnitt gesehen eine Oberseite (26) umfasst, deren Konkavität in normaler Position des Flugzeugs nach oben gerichtet ist, sowie eine Unterseite (28), die gerade ist oder deren Konkavität ebenfalls nach oben gerichtet ist, zumindest im Bereich ihrer Vorderkante (22), sodass zumindest diese Vorderkante eine eingeschnittene Form aufweist.

3. Flugzeug nach Anspruch 1, **dadurch gekennzeichnet, dass** die Unterseite (28) jedes Tragflügels (20, 20') gerade ist oder eine nach oben weisende Konkavität besitzt, auch im Bereich ihrer Hinterkante (24).

4. Flugzeug nach einem der vorstehenden Ansprüche, **dadurch gekennzeichnet, dass** der Neigungswinkel (b, b') jedes Tragflügels (20, 20') von vorne gesehen bezüglich der horizontalen Ebene (PTQ) in der normalen Position des Flugzeugs 10 bis 50°, vorzugsweise 10 bis 30° beträgt.

5. Flugzeug nach Anspruch 4, **dadurch gekennzeichnet, dass** es Mittel zum Schwenken jedes Tragflügels (20, 20') umfasst, um den genannten Neigungswinkel (b, b') in einem Wertebereich von -10° bis 30° zu verändern, insbesondere während der Betriebsphasen außerhalb des Wassers.

6. Flugzeug nach einem der vorstehenden Ansprüche, **dadurch gekennzeichnet, dass** jeder Tragflügel (20, 20') mit einem biegsamen Zwischenstück versehen ist, das ein Ausfedern seines freien Endes (121) im Betrieb entsprechend den Kräften, denen diese Tragfläche ausgesetzt ist, ermöglicht.

7. Flugzeug nach einem der vorstehenden Ansprüche, **dadurch gekennzeichnet, dass** von oben gesehen der Neigungswinkel (a, a') jedes Tragflügels (20) nach hinten bezüglich einer transversalen Achse (A) in normaler Position des Flugzeugs 0 bis 60°, vorzugsweise 20 bis 40° beträgt.

8. Flugzeug nach Anspruch 1, **dadurch gekennzeichnet, dass** es Mittel zum Verstellen des Einstellwinkels (c) in einem Bereich von etwa 10° bezogen auf seinen Nominalwert umfasst.

9. Flugzeug nach einem der vorstehenden Ansprüche, **dadurch gekennzeichnet, dass** die Außenseite (32, 32') jedes Tragflügels durch ein Querruder (36, 36') verlängert ist, das sich schräg sowohl nach oben als auch entgegengesetzt zum Rumpf erstreckt.

10. Flugzeug nach einem der vorstehenden Ansprüche, **dadurch gekennzeichnet, dass** Dämpfungsmittel vorgesehen sind, die jeden Tragflügel mit dem Rumpf verbinden.

11. Flugzeug nach einem der vorstehenden Ansprüche, **dadurch gekennzeichnet, dass** jeder Tragflügel zumindest teilweise in das Innere des Rumpfs einziehbar ist.

12. Flugzeug nach einem der vorstehenden Ansprüche, **dadurch gekennzeichnet, dass** mindestens ein Tragflügel mit einer Plattform versehen ist, die die Funktion eines Trittbretts hat.

13. Flugzeug nach einem der vorstehenden Ansprüche, **dadurch gekennzeichnet, dass** es mindestens einen zusätzlichen Tragflügel umfasst, der bezogen auf die Längsachse des Flugzeugs mittig hinter dem Schwerpunkt platziert ist.

14. Flugzeug nach einem der vorstehenden Ansprüche, **dadurch gekennzeichnet, dass** die Hinterkante (90) und/oder die Vorderkante (91) jedes Tragflügels von einem Querruder (90, 91) gebildet wird, das bezüglich dem übrigen Tragflügel beweglich ist.

## Claims

1. A motorized aeroplane with landing gear comprising a fuselage (11) provided at its base with a pair of hydrofoils (20, 20') configured as ailerons providing hydrodynamic lift and stabilization arranged downwards in the form of an inverted V, **characterized in that**
- the junction (A) between each hydrofoil and the fuselage is situated forward from the centre of gravity (G) of the aeroplane,
- the distance (D) separating the junction (A) between each hydrofoil and the fuselage, with respect to the centre of gravity (G) of the aeroplane is comprised between 0 and 170% of the mean aerodynamic chord of the main wing (12) of the aeroplane, preferably between 20% and 135%,
- each hydrofoil (20, 20') is inclined downwards, from its leading edge (22) in the direction of its trailing edge (24), the straight line (Ω) connecting these two edges forming, with a horizontal tangential plane (PTQ) passing through the bottom of the fuselage, a nominal pitch angle (c) comprised between 2 and 12°, preferably between 6 and 8°,
- the part of the hydrofoil (20, 20') located beneath said tangential plane (PTQ) is situated forward from the centre of gravity (G).

2. The aeroplane according to claim 1, **characterized in that** each hydrofoil (20, 20') comprises, seen in transverse cross-section, a top surface (26) having a concaveness that is directed upwards, in the normal position of the aeroplane, and a bottom surface (28) which is straight or has a concaveness that is also directed upwards, at the least in the area of its leading edge (22), so that at least this leading edge presents an incisive shape.

3. The aeroplane according to claim 1, **characterized in that** the bottom surface (28) of each hydrofoil (20, 20') is straight or has a concaveness that is directed upwards, also in the area of its trailing edge (24).

4. The aeroplane according to one of the foregoing claims, **characterized in that**, in front view, the angle of incline (b, b') of each hydrofoil (20, 20') with respect to the horizontal plane (PTQ) is comprised, in the normal position of the aeroplane, between 10 and 50°, preferably between 10 and 30°.

5. The aeroplane according to claim 4, **characterised in that** it comprises swivelling means of each hydrofoil (20, 20') so as to modify said angle of incline (b, b') in a range of values comprised between -10° and 30°, in particular for the operating phases out of the water.

6. The aeroplane according to one of the foregoing claims, **characterized in that** each hydrofoil (20, 20') is provided with a flexible intermediate section enabling movement of its free end (121) in service, according to the forces to which this hydrofoil is subjected.

7. The aeroplane according to one of the foregoing claims, **characterized in that**, seen from above, the angle of incline (a, a') towards the rear of each hydrofoil (20) with respect to a transverse axis (A) is comprised, in the normal position of the aeroplane, between 0 and 60°, preferably between 20 and 40°.

8. The aeroplane according to claim 1, **characterised in that** it comprises means for adjusting the pitch angle (c) in a range of more or less 10° with respect to its nominal value.

9. The aeroplane according to one of the foregoing claims, **characterized in that** the external side (32, 32') of each hydrofoil is extended by an aileron (36, 36'), extending in oblique manner both upwards and opposite from the fuselage.

10. The aeroplane according to one of the foregoing claims, **characterized in that** damping means are provided, connecting each hydrofoil to the fuselage.

11. The aeroplane according to one of the foregoing claims, **characterized in that** each hydrofoil is at least partially retractable inside the fuselage.

12. The aeroplane according to one of the foregoing claims, **characterized in that** at least one hydrofoil is provided with a platform performing the function of a footboard.

13. The aeroplane according to one of the foregoing claims, **characterized in that** it comprises at least one additional hydrofoil, placed in median manner with reference to the longitudinal axis of the aeroplane, to the rear of the centre of gravity.

14. The aeroplane according to one of the foregoing claims, **characterized in that** the trailing edge (90) and/or the leading edge (91) of each hydrofoil is formed by an aileron (90, 91) that is movable with respect to the rest of the hydrofoil.
